# FASCICULE DE BREVET EUROPEEN

(11) **EP 0 901 961 B1**
(45) Date de publication et mention de la délivrance du brevet: **30.10.2002**
(21) Numéro de dépôt: 98402203.8
(22) Date de dépôt: 07.09.1998
(51) Int. Cl.: B64C 27/467

(54) **Pale à signature sonore réduite pour voilure tournante d'aéronef**
Rotorblatt eines Drehflügelflugzeuges mit reduzierten, akustischen Eigenschaften
Rotorcraft rotor blade with reduced acoustic signature

(30) Priorité: 10.09.1997 FR 9711230
(43) Date de publication de la demande: 17.03.1999
(73) Titulaire: ONERA (Office National d'Etudes et de Recherches Aérospatiales), 92320 Châtillon (FR); Deutsches Zentrum für Luft- und Raumfahrt e.V., 51147 Köln (DE)
(72) Inventeur: Splettstoesser, Wolf R., 38110 Braunschweig (DE); Van der Wall, Berend, 38110 Braunschweig (DE); Delrieux, Yves, 93200 Saint-Denis (FR); Gardarein, Patrick, 92410 Ville d'Avray (FR)
(74) Mandataire: Bérogin, Francis

(56) Documents cités:
- GB-A- 264 965
- GB-A- 2 001 023
- US-A- 2 475 337
- US-A- 3 065 933
- US-A- 5 584 661

## Description

L'invention concerne une pale à signature sonore réduite, pour une voilure tournante d'un aéronef, telle qu'un rotor principal d'hélicoptère.

L'invention se rapporte plus précisément à une pale dont la géométrie est optimisée pour réduire le bruit émis par un rotor principal d'hélicoptère ou rotor de convertible équipé de telles pales, en particulier lors de certaines phases de vol de l'hélicoptère ou du convertible, notamment en descente et en approche pour l'atterrissage, phases de vol au cours desquelles une source de bruit importante provient de l'interaction des pales du rotor avec les tourbillons qu'elles génèrent.

On sait qu'une pale pour voilure tournante d'aéronef comprend en général une partie courante à profil aérodynamique, s'étendant, selon la corde de la pale, entre un bord d'attaque et un bord de fuite, et, selon l'envergure de la pale, entre une partie d'emplanture munie d'un pied de pale pour sa liaison à un moyeu de rotor tournant autour d'un axe de rotation du rotor, et un bout de pale, à son extrémité libre.

Au cours de la rotation du rotor, des tourbillons sont générés en bout de pale par la différence de pression entre l'intrados et l'extrados en bout de chaque pale. Dans certaines configurations de vol, notamment en phase d'approche à basse vitesse, ces tourbillons peuvent entrer en interaction avec les pales suivant la pale d'émission des tourbillons, et les gradients de pression sur les pales, créés par le passage d'un tourbillon dans le plan des pales, engendrent un bruit impulsif qui peut être très intense.

Cette source de bruit impulsionnel provient du fait que le bord d'attaque d'une pale entre simultanément en contact, le long de pratiquement toute son envergure, avec les tourbillons générés par au moins une pale précédente.

On sait que de telles interactions peuvent se produire aussi bien sur une pale avançante que sur une pale reculante.

Du côté de la pale avançante, les tourbillons sont émis dans le second quadrant (azimuts de pale compris entre 90° et 180°, l'azimut 0° correspondant par convention à la position de pale arrière) et les interactions se produisent dans le premier quadrant (azimuts compris entre 0° et 90°). L'émission sonore présente une directivité dans la direction d'avancement de l'hélicoptère, sous le rotor principal.

Du côté de la pale reculante, les tourbillons sont émis dans le troisième quadrant (azimuts compris entre 180° et 270°) et les interactions se produisent dans le quatrième quadrant (azimuts compris entre 270° et 360°). Le bruit produit présente une directivité vers l'arrière de l'hélicoptère, sous le rotor principal.

Le bruit d'interaction pale-tourbillon est très pénalisant, car il est maximum pour des angles de descente qui correspondent à ceux adoptés par les hélicoptères dans les phases d'approche lors des atterrissages.

Le problème principal à la base de l'invention est de diminuer le bruit d'interaction pale-tourbillon en particulier dans une plage d'angles de descente qui recouvre les angles pour lesquels le bruit d'interaction pale-tourbillon émis est maximum (angle de descente d'environ 6°).

Différents moyens ont déjà été proposés pour réduire le bruit d'interaction pale-tourbillon, qui dépend de paramètres essentiellement de deux ordres, liés pour certains au tourbillon lui-même, et pour d'autres à la géométrie de l'interaction pale-tourbillon. Les différents moyens connus tendent donc soit à modifier les caractéristiques des tourbillons émis, c'est-à-dire essentiellement leur intensité et leur rayon visqueux au moment de l'interaction, soit à modifier la géométrie de l'interaction, essentiellement déterminée par la distance entre la pale et le tourbillon et les angles verticaux et horizontaux entre la pale et la ligne tourbillonnaire au moment de l'interaction, ces différents paramètres étant déterminés essentiellement par les conditions de vol, la puissance du rotor et sa vitesse de rotation, le nombre de pales qu'il comprend et leur géométrie (forme en plan, vrillage, profil aérodynamique et bout de pale).

Parmi les moyens connus proposés pour modifier les caractéristiques du tourbillon à l'émission, on peut distinguer entre une première famille de moyens visant à diminuer l'intensité tourbillonnaire du tourbillon généré en bout de pale, et une seconde famille de moyens visant à créer un second tourbillon, plus interne que le tourbillon de bout de pale, afin de répartir l'intensité tourbillonnaire.

Les moyens connus de la première famille se subdivisent eux-mêmes en moyens passifs et moyens actifs, dont l'utilisation modifie la répartition de circulation aérodynamique sur la pale en envergure, car l'intensité du tourbillon émis en bout de pale est directement liée au gradient en envergure de circulation sur la pale à cet endroit, ce gradient étant d'autant plus élevé que le maximum de charge locale est situé près du bout de pale.

Un premier moyen passif connu consiste à affiner le bout ou l'extrémité de pale, de manière à déplacer le maximum de circulation locale vers l'intérieur du rotor, et différentes formes d'extrémité de pale affinées en corde ont été proposées.

Un deuxième moyen passif connu consiste à donner à la pale une loi de vrillage aboutissant à un gradient de circulation faible en bout de pale, aux azimuts d'émission.

D'autres moyens passifs connus consistent à ajouter un aileron vertical sur le profil d'extrémité en bout de pale pour empêcher ou perturber l'enroulement du tourbillon, ou à ajouter un becquet (spoiler) sur le bord d'attaque en extrémité de pale, pour augmenter le rayon visqueux du tourbillon.

Les moyens actifs connus sont d'éjecter un débit d'air en bout de pale et vers le bord de fuite, pour diffuser le tourbillon, ou de réduire l'intensité tourbillonnaire à l'aide de lois de commande de pas appropriées, telles que les commandes multicycliques et commandes individuelles des pales, permettant de commander le pas des pales de sorte que la portance des pales aux azimuts d'émission des tourbillons d'interaction soit la plus faible possible.

La seconde famille de moyens connus, visant à répartir l'intensité tourbillonnaire, comprend l'adjonction d'une petite aile en bout de pale, de sorte à forcer la génération de deux tourbillons, l'un au bout de la pale, et l'autre à l'extrémité de la petite aile additionnelle.

Les moyens connus pour modifier les caractéristiques de la géométrie de l'interaction pale-tourbillon afin de diminuer le bruit se subdivisent également en moyens actifs et moyens passifs.

Les moyens actifs comprennent les commandes multicycliques, déjà citées, commandant, pour cette application, le pas des pales pour qu'il soit maximum du côté de la pale avançante, entre les azimuts d'interaction et les azimuts d'émission, afin d'augmenter la charge et les vitesses induites vers le bas, et donc d'accélérer la convexion des tourbillons vers le bas, pour faire en sorte que les pales suivantes n'entrent pas, ou entrent le moins possible, en collision avec les tourbillons émis.

Les moyens passifs consistent à modifier la géométrie du bord d'attaque ou de la ligne passant par les foyers aérodynamiques des sections élémentaires profilées successives de la pale le long de l'envergure, dite ligne de quart-de-corde (car les foyers aérodynamiques sont en général situés chacun au quart avant de la corde de la section élémentaire de pale correspondante). En effet, le bruit d'interaction pale-tourbillon est d'autant plus élevé que les pics acoustiques émis par les différentes sections de pale arrivent en phase à un point d'observation. Donc, lorsque la pale, à un azimut donné, se trouve parallèle à une ligne tourbillonnaire, les différentes sections de pale entrent en collision avec le tourbillon au même instant. Pour rompre le parallélisme entre une pale et une ligne tourbillonnaire, et ainsi déphaser les sources acoustiques, il a été proposé une pale dont la partie externe est en flèche avant, tandis qu'une partie plus interne en flèche arrière équilibre la pale.

Le bruit d'interaction pale-tourbillon peut également être réduit par la modification des conditions de descente et/ou de la trajectoire d'approche de l'hélicoptère, en augmentant l'angle de descente et/ou la vitesse de l'hélicoptère, de manière à s'éloigner de la configuration la plus bruyante.

Cette solution est cependant difficilement applicable, car, pour des raisons de confort et de sécurité, il n'est pas envisageable d'utiliser des angles de descente supérieurs à 8°, alors que l'angle de descente optimum de 6°, qui correspond à l'angle de descente de certification des hélicoptères, est celui au voisinage duquel le maximum de bruit est émis.

La nuisance acoustique d'un rotor peut également être réduite par la réduction de la vitesse de rotation et/ou l'augmentation du nombre des pales, mais les gains obtenus dépendent fortement des conditions de vol réelles, au cours desquelles les fluctuations de pente de descente, de vent et de vitesse imposent des solutions relativement indépendantes des différents paramètres précités.

Le problème à la base de l'invention est de diminuer l'émission sonore d'une part par une atténuation du caractère impulsionnel de la source de bruit qui soit plus prononcée qu'avec les moyens connus à cet effet, et de plus indépendante de l'angle de descente, en réduisant le bruit d'interaction pale-tourbillon par modification de la géométrie d'interaction, et en brisant le parallélisme, en particulier horizontal, entre la ligne tourbillonnaire et le bord d'attaque de la pale.

Un autre but de l'invention est de réduire le bruit d'une pale en rotation en modifiant en outre le tourbillon d'extrémité qu'elle engendre et/ou en modifiant la distance pale-tourbillon, notamment en brisant le parallélisme vertical entre les lignes tourbillonnaires et la pale.

L'invention a encore pour but d'obtenir une réduction du bruit d'interaction pale-tourbillon sans pénalité sur les performances aérodynamiques de la pale dans l'ensemble du domaine de vol.

A cet effet, l'invention propose une pale pour voilure tournante d'aéronef, du type présenté ci-dessus, qui se caractérise en ce que sa partie courante profilée comprend une partie d'extrémité externe, par rapport à l'axe du rotor, et adjacente au bout de pale, cette partie d'extrémité s'étendant selon l'envergure sur une distance d'au moins 0,2 R, où R est le rayon du rotor mesuré entre l'axe de rotation du rotor et le bout de pale, et cette partie d'extrémité étant en flèche arrière sur une distance selon l'envergure d'au moins 0,15 R, la partie courante profilée de la pale comprenant également une partie en flèche avant et immédiatement adjacente à l'intérieur de la partie d'extrémité en flèche arrière, la partie courante à profil aérodynamique comprenant, en outre, une portion à corde progressivement croissante, qui se prolonge par une portion à corde progressivement décroissante selon l'envergure en direction du bout de pale.

Sur une telle pale, la présence d'une flèche arrière dans la partie d'extrémité externe de la pale, qui est une zone de contribution sonore maximale, a pour effet de rompre le parallélisme horizontal entre la ligne tourbillonnaire et le bord d'attaque de la pale. La particularité de la partie d'extrémité en flèche arrière de la pale de l'invention est qu'elle s'étend sur au moins 20 % du rayon R, qui contribue à plus de 80 % du bruit rayonné, alors que les bouts de pale en flèche arrière de pales connues s'étendent généralement sur 5 à 10 % du rayon R et ne dépassent jamais 18 % de R. Une autre particularité de la pale de l'invention est sa partie en flèche avant, immédiatement adjacente à l'intérieur de la partie d'extrémité en flèche arrière, et qui non seulement assure l'équilibrage de la pale autour de la ligne de quart-de-corde mais contribue également à la réduction du bruit d'interaction pale-tourbillon, en déphasant les pics de pression émis par les différentes sections de pale. Ainsi, la géométrie de l'interaction pale-tourbillon peut être modifiée par la forme donnée au bord d'attaque de la pale au moins dans ses parties adjacentes en flèche arrière et flèche avant.

De plus, pour modifier la distance pale-tourbillon et briser le parallélisme vertical entre la pale et les lignes tourbillonnaires en interaction, la pale de l'invention présente une distribution originale de corde selon l'envergure, par le fait que sa partie courante profilée comprend une portion à corde progressivement croissante selon l'envergure, en direction du bout de pale. Cette portion à corde croissante peut comprendre au moins une zone dans laquelle le bord d'attaque est orienté, selon l'envergure en direction du bout de pale, vers l'avant de la pale dans le plan du rotor, et/ou au moins une zone dans laquelle le bord de fuite est orienté, toujours selon l'envergure en direction du bout de pale, vers l'arrière de pale dans le plan du rotor. Cette portion de pale à corde croissante induit une variation de la vitesse verticale de convexion des tourbillons le long de l'envergure de la pale, ce qui a pour effet de briser le parallélisme dans le plan vertical.

De plus, la distribution originale de corde selon l'envergure est telle que la portion à corde croissante de la pale se prolonge, selon l'envergure en direction du bout de pale, par une portion à corde progressivement décroissante en direction du bout de pale, ce qui a pour avantage de réduire les gradients de circulation en extrémité, et donc de réduire l'intensité du tourbillon émis en bout de pale. En outre, cette distribution de corde s'ajoute à l'effet de flèche arrière et avant pour réduire l'impulsivité du bruit d'interaction pale-tourbillon.

Selon une géométrie préférée de la pale, sa partie en flèche avant comprend une portion interne et une portion externe, adjacentes l'une à l'autre selon l'envergure en direction du bout de pale, la portion interne étant à corde progressivement croissante selon l'envergure en direction de la portion externe, et la portion externe étant, d'une part, adjacente à la partie d'extrémité en flèche arrière, et, d'autre part, à corde progressivement décroissante selon l'envergure en direction de cette partie d'extrémité en flèche arrière. En outre, cette partie d'extrémité en flèche arrière est avantageusement à corde progressivement décroissante selon l'envergure jusqu'au bout de pale.

Avantageusement, la pale peut en outre comprendre une ou plusieurs des caractéristiques suivantes :
- sa partie d'extrémité en flèche arrière débute à une section élémentaire de pale dont la position selon l'envergure est comprise entre 0,5 R et 0,8 R, cette partie en flèche arrière s'étendant de préférence entre 0,8 R et R et l'angle de flèche arrière étant compris entre 10° et 40°, et de préférence sensiblement de 21° ;
- sa partie en flèche avant débute à une section élémentaire de pale dont la position, selon l'envergure, est comprise entre 0,35 et 0,65 R et s'étend jusqu'à une section élémentaire de pale dont la position selon l'envergure est comprise entre 0,5 et 0,8 R, et l'angle de flèche avant est inférieur ou égal à 20°, et de préférence est de l'ordre de 3,8° ;
- sa partie courante profilée comporte une portion interne à flèche nulle, s'étendant de la partie d'emplanture de la pale à sa partie en flèche avant ;
- la section élémentaire de pale de corde maximum est située dans une zone comprise entre 0,45 R et 0,75 R environ, et la valeur de la corde maximum est comprise entre environ 105 % et environ 150 % de la corde à l'emplanture, à 0,2 R de la pale ;
- sa partie courante profilée présente une corde augmentant progressivement selon l'envergure en direction du bout de pale depuis environ 0,2 R jusqu'à environ 0,67 R, où la corde prend une valeur maximale d'environ 133 % de la corde à l'emplanture, la section élémentaire de pale ayant la corde maximum étant située plus près de l'emplanture que la section élémentaire de déport maximum vers l'avant dans la partie en flèche avant, la corde étant ensuite réduite selon l'envergure jusqu'au bout de pale, où la corde est égale à sensiblement la moitié de la corde à l'emplanture ;
- la pale présente une épaisseur relative qui diminue selon l'envergure en direction du bout de pale, au moins dans la partie d'extrémité en flèche arrière, et de préférence qui varie d'environ 12 % dans la partie d'emplanture à environ 7 % au bout de pale ;
- la pale présente une loi de vrillage linéaire, le vrillage variant d'environ de -10° du centre du rotor au bout de pale ;
- la partie d'extrémité en flèche arrière présente une forme en plan sensiblement rectangulaire ou trapézoïdale, ou une évolution parabolique de la flèche arrière ; et
- le bout de pale, qui est en saillie vers l'extérieur de la partie d'extrémité en flèche arrière de la pale, est à flèche nulle ou à flèche avant ou à forme en plan parabolique.

L'invention a également pour objet une voilure tournante d'aéronef, comprenant un rotor à au moins deux pales reliées par leur pied à un moyeu destiné à être entraîné en rotation autour d'un axe de rotation du rotor, cette voilure se caractérisant en ce que chaque pale du rotor est une pale telle que définie ci-dessus.

D'autres avantages et caractéristiques de l'invention découleront de la description donnée ci-dessous d'exemples de réalisation décrits, à titre non limitatif, en référence au dessin annexé sur lequel :
- la figure unique est une vue en plan d'un exemple de réalisation préféré de pale selon l'invention.

Sur la figure, la pale de rotor principal d'hélicoptère comprend une partie courante profilée 21 qui s'étend entre une partie d'emplanture 25, qui est munie d'un pied de pale 26 par lequel la pale est liée, de manière connue, à un moyeu 27 du rotor destiné à être entraîné en rotation autour de l'axe Z-Z du rotor, et un bout de pale 28 à l'extrémité libre de la pale. La pale peut être commandée en pas autour d'un axe de changement de pas 29 rectiligne et sensiblement radial par rapport à l'axe Z-Z du rotor. L'allongement de la pale, rapport du rayon du rotor sur la corde à l'emplanture, a une valeur comprise entre 13 et 17.

La partie courante profilée 21 comprend une partie d'extrémité externe 31, par rapport à l'axe Z-Z du rotor, et immédiatement adjacente au bout de pale 28, cette partie d'extrémité 31 étant une partie en flèche arrière sur toute sa longueur et s'étendant, selon l'envergure, sur une distance supérieure ou égale à 0,2 R, où R est le rayon du rotor mesuré entre l'axe Z-Z de rotation du rotor et le bout de pale 28. La partie courante profilée 21 comprend également une partie en flèche avant 32, qui est immédiatement adjacente à la partie 31 en flèche arrière et à l'intérieur de cette dernière, afin d'assurer l'équilibre de la pale.

Enfin, entre la partie 32 en flèche avant et la partie d'emplanture 25, la partie courante profilée 21 comprend une portion interne 33 qui est à flèche nulle.

Par partie en flèche avant ou en flèche arrière, il faut comprendre, selon l'invention, une partie dans laquelle, selon l'envergure en direction du bout de pale 28, la ligne 24 de quart de corde est orientée respectivement vers l'avant ou vers l'arrière par rapport à l'axe de pas 29, dans le plan de rotation de la pale.

Grâce aux parties en flèche arrière 31 et en flèche avant 32, on comprend que le parallélisme horizontal entre une ligne tourbillonnaire et le bord d'attaque 22 de la pale, dans le plan du rotor, est brisé. En effet, dans les parties en flèche arrière 31 et en flèche avant 32, les sections de pale entrent en interaction avec le tourbillon pour certaines plus tôt et pour d'autres plus tard que les sections situées dans la portion interne 33 de la pale, de sorte que les pics acoustiques sont émis aux différentes sections à des instants d'émission différents et parviennent à un même point d'observation après des temps de parcours différents, et donc avec un déphasage grâce auquel le niveau de bruit impulsif est très réduit. Il est essentiel que la partie en flèche arrière 31 s'étende sur au moins 20 % du rayon R, c'est-à-dire sur une zone qui contribue à plus de 80 % du bruit rayonné.

En outre, la partie en flèche avant 32, assurant l'équilibrage de la pale autour de la ligne 24 de quart de corde, contribue elle aussi à la réduction du bruit d'interaction pale-tourbillon pour la raison expliquée ci-dessus, c'est-à-dire en déphasant également les pics de pression émis par les différentes sections de pale dans cette partie 32.

D'un point de vue purement géométrique, on sait qu'une partie externe de pale en flèche avant est plus efficace qu'une partie externe en flèche arrière pour réduire le bruit d'interaction pale-tourbillon du côté de la pale avançante, car dans le premier quadrant, une partie d'extrémité de pale en flèche avant ne peut pas être parallèle aux lignes tourbillonnaires. Au contraire, une partie d'extrémité de pale en flèche arrière est susceptible d'être parallèle aux lignes tourbillonnaires pour des azimuts voisins de 90°. Cependant, une pale à partie d'extrémité en flèche avant présente une moindre stabilité aéroélastique que la pale de l'invention, et, de plus, avec une partie d'extrémité en flèche avant, les efforts de torsion sont très importants, notamment du côté de la pale avançante. En outre, une partie d'extrémité externe de pale en flèche avant renforce le parallélisme entre cette partie d'extrémité de pale et les lignes tourbillonnaires, du côté de la pale reculante, dans le quatrième quadrant, ce qui augmente de façon significative le niveau du bruit d'interaction pale-tourbillon. Au contraire, une pale selon l'invention, avec partie d'extrémité externe en flèche arrière, augmente l'angle entre les lignes tourbillonnaires et le bord d'attaque 22, du côté de la pale reculante, et permet de réduire le bruit d'interaction correspondant.

Dans l'exemple préféré de pale de la figure, on retrouve une partie courante profilée 21, s'étendant entre un bout de pale 28 et une partie d'emplanture 25 liée par son pied de pale 26 au moyeu 27 du rotor d'axe Z-Z, et qui comprend une partie d'extrémité externe 31 en flèche arrière, une partie en flèche avant 32 immédiatement adjacente à la partie en flèche arrière 31 et à l'intérieur de cette dernière, et une portion interne 33 à flèche nulle, reliant la partie en flèche avant 32 à la partie d'emplanture 25.

Plus précisément, la partie en flèche avant 32 comprend une portion interne 32a et une portion externe 32b qui sont adjacentes l'une à l'autre, selon l'envergure et en direction du bout de pale 28. La portion interne 32a est à corde progressivement croissante selon l'envergure et en direction de la portion externe 32b, laquelle est directement adjacente à la partie d'extrémité en flèche arrière 31 et à corde progressivement décroissante selon l'envergure et en direction de cette partie en flèche arrière 31. Cette partie 31 en flèche arrière est elle-même à corde progressivement décroissante selon l'envergure jusqu'au bout de pale 28. De plus, la portion interne 33, bien qu'à flèche nulle, est également à corde progressivement croissante, depuis la partie d'emplanture 25 jusqu'à la portion interne 32a de la partie en flèche avant 32.

Ainsi, la partie courante profilée 21 de la pale comprend, à l'extérieur de la partie d'emplanture 25, une portion à corde progressivement croissante selon l'envergure, en direction du bout de pale 28, et qui correspond aux portions 33 et 32a, et cette portion à corde progressivement croissante est prolongée, selon l'envergure et en direction du bout de pale 28, par une portion à corde progressivement décroissante, correspondant à la portion 32b et à la partie en flèche arrière 31.

La portion à corde croissante, définie par les portions 33 et 32a, est une zone dans laquelle le bord d'attaque 22 est orienté, selon l'envergure et en direction du bout de pale 28, vers l'avant de la pale dans le plan du rotor, tandis que la zone du bord de fuite 23 située dans la portion 33 à flèche nulle est orientée, selon l'envergure et vers le bout de pale 28, vers l'arrière de la pale dans le plan du rotor. Dans les parties en flèche avant 32 et en flèche arrière 31, la ligne quart de corde 24 est respectivement orientée vers l'avant et vers l'arrière de l'axe de pas 29, les bords d'attaque 22 et de fuite 23 étant tous deux en flèche avant dans la portion 32b et en flèche arrière dans la partie en flèche arrière 31. De ce fait, cette partie en flèche arrière 31 présente une forme en plan sensiblement trapézoïdale.

Grâce aux parties en flèche avant 32 et en flèche arrière 31, la pale de la figure a l'avantage de réduire l'impulsivité du bruit d'interaction pale-tourbillon par rupture du parallélisme horizontal entre les lignes tourbillonnaires et le bord d'attaque 22 de la pale. Mais en outre, la pale de la figure permet, grâce à sa distribution originale de corde selon l'envergure, de modifier la distance pale-tourbillon, non seulement en éloignant la ligne tourbillonnaire de la pale, de manière globale, mais aussi en brisant le parallélisme vertical en modifiant la distance pale-tourbillon dans un plan vertical aux différentes sections de pale en interaction, contrairement à ce qui est observé avec une pale rectangulaire classique, à laquelle les lignes tourbillonnaires en interaction sont parallèles non seulement dans le plan du rotor mais aussi quasi-parallèles dans un plan vertical.

Avec la pale de l'invention, le parallélisme dans le plan vertical est brisé grâce à sa loi de variation de corde selon l'envergure, selon laquelle la corde augmente jusqu'à une section de pale située à environ 0,7 R, où R est le rayon du rotor, puis la corde est réduite jusqu'au bout de pale 28, pour conserver la poussée du rotor. Cette distribution de corde permet d'augmenter la portance, donc les vitesses induites vers le bas, sur la portion d'envergure voisine du maximum de corde, et donc de creuser les tourbillons vers le bas dans cette zone. Les lignes tourbillonnaires émises sont ainsi déformées par le passage des pales suivantes dans la portion du disque rotor comprise entre l'azimut d'émission et l'azimut d'interaction. Cet effet s'ajoute à l'effet de flèche avant de la partie 32 et de flèche arrière de la partie 31 pour réduire l'impulsivité du bruit d'interaction pale-tourbillon. Un autre avantage de cette distribution de corde est de réduire les gradients de circulation au niveau du bout de pale 28, en déplaçant le maximum de portance vers l'intérieur de la pale, ce qui réduit d'intensité du tourbillon émis au bout de pale 28.

En complément à cette loi de variation de corde, la pale présente une distribution d'épaisseur de profil, qui est déterminée pour réduire le bruit d'épaisseur en vol de descente mais aussi en palier à basse et grande vitesses. A cet effet, la loi de variation d'épaisseur correspond à une diminution de l'épaisseur relative des profils des sections de pale depuis le pied de pale 26, où l'épaisseur relative est d'environ 12 % de la corde de la section considérée, jusqu'au bout de pale 28, où l'épaisseur relative est d'environ 7 % de la corde de la section considérée. Le choix de profils dont l'épaisseur diminue avec l'envergure permet d'obtenir de bonnes performances aérodynamiques et acoustiques. Ces profils permettent d'adopter une loi de vrillage linéaire pour la pale, avec un vrillage aérodynamique qui décroît d'environ -10° du centre du rotor, c'est-à-dire au niveau de l'axe Z-Z, jusqu'au bout de pale 28. De manière conventionnelle, le vrillage est mesuré négativement lorsque le bord d'attaque 22 est abaissé en parcourant les sections de pale depuis le centre Z-Z du rotor vers le bout de pale 28, le calage géométrique final étant obtenu en rajoutant l'incidence de portance nulle du profil considéré au vrillage aérodynamique.

La ligne 24 de quart de corde (correspondant au lieu des foyers aérodynamiques des sections de pale profilées successives) est linéaire par segments. La partie en flèche arrière 31 débute à une section de pale située en envergure entre 0,5 R et 0,8 R, et présente un angle de flèche arrière compris entre 10° et 40°. Dans une réalisation optimisée, la partie 31 en flèche arrière s'étend entre 0,8 R et R, avec un angle de flèche arrière de 21°. La partie en flèche avant 32 peut débuter à une section élémentaire de pale dont la position, selon l'envergure, est comprise entre 0,35 R et 0,65 R et s'étend jusqu'à une section élémentaire de pale dont la position selon l'envergure est comprise entre 0,5 et 0,8 R environ, avec un angle de flèche avant inférieur ou égal à 20°. Dans la réalisation optimisée, la partie en flèche avant 32 s'étend de 0,45 R à 0,8 R, avec un angle de flèche avant de 3,8°. Cet angle de flèche avant a été déterminé de manière à minimiser les efforts de torsion sur la pale et les efforts de commande en pas. La portion 33 à flèche nulle s'étend de préférence de la partie d'emplanture 25 jusqu'à une section de pale située à 0,45 R en envergure.

La section de pale de corde maximum est située, en envergure, entre 0,45 R et 0,75 R, la valeur de la corde maximum étant comprise entre 105 % et 150 % de la corde à l'emplanture (à 0,2 R). Dans la réalisation optimisée, la corde c est constante en emplanture jusqu'au début de la portion 33, soit à 0,2 R en envergure, et la corde augmente ensuite progressivement jusqu'à la valeur 1,1c au début de la portion 33a, à 0,45 R, et la corde atteint la valeur 1,3c à la section située à 0,67 R, correspondant à la limite entre les portions 32a et 32b. On constate que la section de corde maximum de 1,3c ou 1,33c est située plus près de la partie d'emplanture 25 que la section de déport maximum vers l'avant de la ligne de quart de corde 24, cette section se trouvant à 0,8 R à la jonction entre les parties en flèche avant 32 et en flèche arrière 31. Dans la partie en flèche arrière 31, la corde est réduite jusqu'au bout de pale 28, où elle est égale à 0,5c (moitié de la corde à l'emplanture).

En variante, dans la partie en flèche arrière 31, le bord d'attaque 22 peut présenter une évolution parabolique, au moins dans sa partie la plus proche du bout de pale 28. Mais il est également possible que la partie d'extrémité externe 31 présente une évolution parabolique de sa flèche arrière.

Sur une telle pale, la mise en flèche arrière de sa partie d'extrémité externe 31, effectuée initialement à des fins acoustiques, procure simultanément une amélioration des performances aérodynamiques à grande vitesse. Pour les très grandes vitesses, la partie d'extrémité externe 31 peut recevoir une forme optimisée, par exemple parabolique à flèche évolutive et avec mise en dièdre vers le bas. Ce type d'extrémité apparaît bénéfique pour le bruit impulsif à grande vitesse. Concernant le bruit d'interaction pale-tourbillon, en vol de descente, une telle forme présente l'avantage d'accentuer la brisure du parallélisme entre la pale et le tourbillon en interaction, et, de plus, permet une réduction de l'intensité du tourbillon.

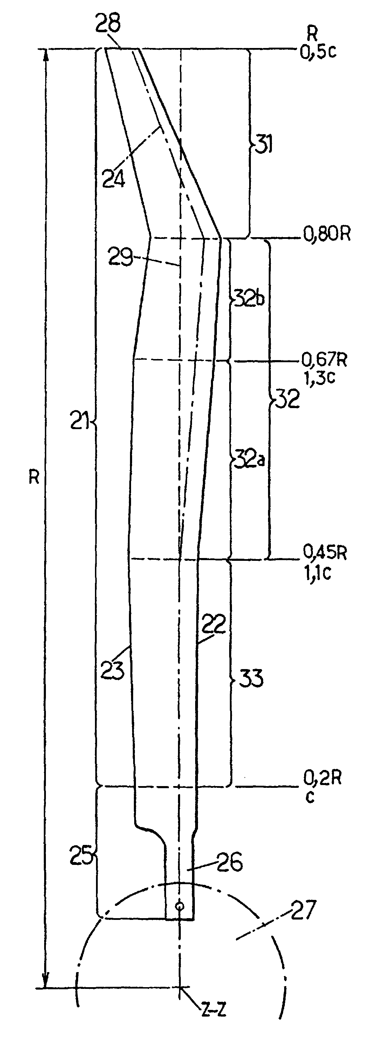

En variante également, la géométrie du bout de pale 28 peut être différente de celle représentée sur la figure 1. En particulier, le bout de pale peut comporter une ailette en saillie vers l'extérieur de la partie d'extrémité en flèche arrière 31, selon l'envergure, avec une flèche nulle ou une flèche avant, ou peut encore être un bout de pale ayant en plan une forme parabolique. Mais ce bout de pale ne s'étend jamais sur plus de 5 % de R, de sorte que la partie d'extrémité externe 31, qui s'étend sur au moins 20% de R, est en flèche arrière sur au moins 15 % de R.

La pale est optimisée pour réduire le bruit d'interaction pale-tourbillon pour des angles de descente voisins de 6°, et pour des vitesses de vol voisines de 125 km/h. Par rapport à une pale de référence, de forme en plan rectangulaire avec un bout de pale parabolique et en dièdre vers le bas s'étendant sur 5 à 8 % en envergure, la pale procure un gain de plus de 6 dBA. Sa courbe de niveau sonore en fonction de l'angle de descente ne présente pas de maximum élevé pour un angle de descente précis, contrairement à la courbe correspondante de la pale de référence, et entre le vol en palier et le vol de descente à 12°, le niveau sonore de la pale de l'invention ne varie pas de plus de 6 dBA, et décroît rapidement pour des angles de descente supérieurs, le niveau sonore restant nettement inférieur au niveau sonore du rotor de référence, dans la plage utilisable des angles de descente. Grâce à la pale de l'invention, les variations de pente ou les changements des conditions atmosphériques, inévitables en situation de vol réel, n'engendrent donc pas de forte augmentation du niveau sonore. De plus, à vitesse périphérique égale, la pale autorise un gain supérieur à 5 dBA en vol en palier à 210 km/h, et de 4 dBA à 250 km/h, ces gains acoustiques s'accompagnant de réduction de la puissance consommée en vol stationnaire et en vol en palier, quelle que soit la vitesse d'avancement. Enfin, les niveaux de vibrations de la pale de l'invention restent inférieurs à ceux de la pale de référence.

Pour ces différentes raisons, il est donc très avantageux d'équiper un rotor principal d'hélicoptère de pales selon l'invention.

## Revendications

1. Pale pour voilure tournante d'aéronef, comprenant une partie courante (21) à profil aérodynamique s'étendant, selon la corde de la pale, entre un bord d'attaque (22) et un bord de fuite (23), et, selon l'envergure de la pale, entre une partie d'emplanture (25) munie d'un pied de pale (26) pour sa liaison à un moyeu de rotor (27) tournant autour d'un axe de rotation (Z-Z) du rotor, et un bout de pale (28), à son extrémité libre, **caractérisée en ce que** ladite partie courante (21) profilée comprend une partie d'extrémité externe (31), par rapport à l'axe (Z-Z) du rotor, et adjacente au bout de pale (28), ladite partie d'extrémité (31) s'étendant selon l'envergure sur une distance d'au moins 0,2 R, où R est le rayon du rotor mesuré entre l'axe de rotation (Z-Z) du rotor et le bout de pale (28), et ladite partie d'extrémité (31) étant en flèche arrière sur une distance selon l'envergure d'au moins 0,15 R, ladite partie courante profilée (21) comprenant également une partie en flèche avant (32), et immédiatement adjacente à l'intérieur de la partie d'extrémité en flèche arrière (31), la partie courante à profil aérodynamique (21) comprenant en outre une portion (33-32a) à corde progressivement croissante qui se prolonge par une portion (32b-31) à corde progressivement décroissante selon l'envergure en direction du bout de pale (28).

2. Pale selon la revendication 1, **caractérisée en ce que** ladite portion à corde croissante (33-32a) comprend au moins une zone dans laquelle le bord d'attaque (22) est orienté, selon l'envergure en direction du bout de pale (28), vers l'avant de la pale dans le plan du rotor.

3. Pale selon l'une des revendications 1 et 2, **caractérisée en ce que** ladite portion à corde croissante (33-32a) comprend au moins une zone (33) dans laquelle le bord de fuite (23) est orienté, selon l'envergure en direction du bout de pale (28), vers l'arrière de la pale dans le plan du rotor.

4. Pale selon l'une quelconque des revendications 1 à 3, **caractérisée en ce que** ladite partie en flèche avant (32) comprend une portion interne (32a) et une portion externe (32b), adjacentes l'une à l'autre selon l'envergure en direction du bout de pale (28), ladite portion interne (32a) étant à corde progressivement croissante selon l'envergure en direction de ladite portion externe (32b), et ladite portion externe (32b) étant, d'une part, adjacente à ladite partie d'extrémité en flèche arrière (31), et, d'autre part, à corde progressivement décroissante selon l'envergure en direction de ladite partie d'extrémité en flèche arrière (31).

5. Pale selon l'une quelconque des revendications 1 à 4, **caractérisée en ce que** la partie d'extrémité en flèche arrière (31) débute à une section élémentaire de pale dont la position selon l'envergure est comprise entre 0,5 R et 0,8 R, la partie en flèche arrière (31) s'étendant de préférence entre 0,8 R et R, et l'angle de flèche arrière étant compris entre 10° et 40°, et de préférence sensiblement de 21°.

6. Pale selon l'une quelconque des revendications 1 à 5, **caractérisée en ce que** la partie en flèche avant (32) débute à une section élémentaire de pale dont la position selon l'envergure est comprise entre 0,35 et 0,65 R et s'étend jusqu'à une section élémentaire de pale dont la position, selon l'envergure, est comprise entre 0,5 et environ 0,8 R, et l'angle de flèche avant est inférieur ou égal à 20°, et de préférence est de l'ordre de 3,8°.

7. Pale selon l'une quelconque des revendications 1 à 6, **caractérisée en ce qu'**elle comporte une portion interne (33) de partie courante profilée (21) à flèche nulle, s'étendant de la partie d'emplanture (25) de la pale à sa partie en flèche avant (32).

8. Pale selon l'une quelconque des revendications 1 à 7, **caractérisée en ce que** la section élémentaire de pale de corde maximum est située dans une zone comprise entre 0,45 R et 0,75 R environ, et la valeur de la corde maximum est comprise entre environ 105 % et environ 150 % de la corde à l'emplanture de la pale.

9. Pale selon la revendication 8, **caractérisée en ce qu'**elle présente, dans sa partie courante profilée, une corde augmentant progressivement selon l'envergure en direction du bout de pale (28) depuis environ 0,2 R jusqu'à environ 0,67 R, où la corde prend une valeur maximale d'environ 133 % de la corde à l'emplanture (25), la section élémentaire de pale ayant la corde maximum étant située plus près de l'emplanture (25) que la section élémentaire de déport maximum vers l'avant dans la partie en flèche avant (32), la corde étant ensuite réduite selon l'envergure jusqu'au bout de pale (28), où la corde est égale à sensiblement la moitié de la corde à l'emplanture (25).

10. Pale selon l'une quelconque des revendications 1 à 9, **caractérisée en ce qu'**elle présente une épaisseur relative qui diminue selon l'envergure en direction du bout de pale (28), au moins dans la partie d'extrémité en flèche arrière (31), et de préférence qui varie d'environ 12 % dans la partie d'emplanture (25) à environ 7 % au bout de pale (28).

11. Pale selon l'une quelconque des revendications 1 à 10, **caractérisée en ce qu'**elle présente une loi de vrillage linéaire, le vrillage variant d'environ -10° du centre (Z-Z) du rotor au bout de pale (28).

12. Pale selon l'une quelconque des revendications 1 à 11, **caractérisée en ce que** la partie d'extrémité en flèche arrière (31) présente une forme en plan sensiblement rectangulaire ou trapézoïdale.

13. Pale selon l'une quelconque des revendications 1 à 11, **caractérisée en ce que** la partie d'extrémité en flèche arrière (31) présente une évolution parabolique de la flèche arrière.

14. Pale selon l'une quelconque des revendications 1 à 13, **caractérisée en ce que** le bout de pale (28), en saillie vers l'extérieur de la partie d'extrémité en flèche arrière (31), est à flèche nulle ou à flèche avant ou à forme en plan parabolique.

15. Voilure tournante d'aéronef, comprenant un rotor à au moins deux pales reliées par leur pied (6, 26) à un moyeu (7, 27) destiné à être entraîné en rotation autour d'un axe (Z-Z) de rotation du rotor, **caractérisé en ce que** chaque pale du rotor est une pale selon l'une des revendications 1 à 14.

## Patentansprüche

1. Blatt für eine Luftfahrzeug-Drehfügelanordnung, das einen Strömungsteil (21) mit aerodynamischem Profil umfaßt, der sich entlang der Tiefe des Blattes zwischen einer Vorderkante (22) und einer Hinterkante (23) und entlang der Spannweite des Blattes zwischen einem Wurzelteil (25), der mit einem Blattfuß (26) für seine Verbindung mit einer um eine Drehachse (Z-Z) des Rotors drehbaren Rotornabe (27) versehen ist, und einer Blattspitze (28) an seinem freien Ende erstreckt, **dadurch gekennzeichnet, daß** der profilierte Strömungsteil (21) einen in bezug auf die Achse (Z-Z) des Rotors äußeren und an die Blattspitze (28) angrenzenden Endteil (31) umfaßt, wobei sich dieser Endteil (31) entlang der Spannweite über eine Entfernung von wenigstens 0,2 R erstreckt, worin R der zwischen der Drehachse (Z-Z) des Rotors und der Blattspitze (28) gemessene Radius ist, und wobei der genannte Endteil (31) über eine Entfernung entlang der Spannweite von wenigstens 0,15 R rückwärts gepfeilt ist, wobei der genannte profilierte Strömungsteil (21) auch einen vorwärts gepfeilten und unmittelbar an das Innenende des rückwärts gepfeilten Endteils (31) angrenzenden Teil (32) umfaßt, wobei der Strömungsteil (21) mit aerodynamischem Profil außerdem einen Teil (33-32a) mit fortschreitend anwachsender Tiefe umfaßt, der durch einen Teil (32b-31) mit fortschreitend abnehmender Tiefe entlang der Spannweite in Richtung zur Blattspitze (28) verlängert wird.

2. Blatt nach Anspruch 1, **dadurch gekennzeichnet, daß** der genannte Teil mit anwachsender Tiefe (33-32a) entlang der Spannweite in Richtung zur Blattspitze (28) wenigstens eine Zone umfaßt, in der die Vorderkante (22) in der Rotorebene zur Blattvorwärtsseite hin orientiert ist.

3. Blatt nach einem der Ansprüche 1 und 2, **dadurch gekennzeichnet, daß** der genannte Teil mit anwachsender Tiefe (33-32a) entlang der Spannweite in Richtung zur Blattspitze (28) wenigstens eine Zone (33) umfaßt, in der die Hinterkante (23) in der Rotorebene zur Blattrückwärtsseite hin orientiert ist.

4. Blatt nach einem der Ansprüche 1 bis 3, **dadurch gekennzeichnet, daß** der genannte vorwärts gepfeilte Teil (32) einen inneren Teil (32a) und einen äußeren Teil (32b) umfaßt, die entlang der Spannweite in Richtung zur Blattspitze (28) zueinander benachbart sind, wobei der innere Teil (32a) eine fortschreitend anwachsende Tiefe entlang der Spannweite in Richtung zum äußeren Teil (32b) hat und der äußere Teil (32b) einerseits an den rückwärts gepfeilten Endteil (31) angrenzt und andererseits eine fortschreitend abnehmende Tiefe entlang der Spannweite in Richtung zum rückwärts gepfeilten Endteil (31) hat.

5. Blatt nach einem der Ansprüche 1 bis 4, **dadurch gekennzeichnet, daß** der rückwärts gepfeilte Endteil (31) mit einem Elementarblattquerschnitt anfängt, dessen Position entlang der Spannweite zwischen 0,5 R und 0,8 R liegt, wobei sich der rückwärts gepfeilte Teil (31) vorzugsweise zwischen 0,8 R und R erstreckt und der Rückwärtspfeilungswinkel zwischen 10° und 40° liegt und vorzugsweise im wesentlichen 21° beträgt.

6. Blatt nach einem der Ansprüche 1 bis 5, **dadurch gekennzeichnet, daß** der vorwärts gepfeilte Teil (32) mit einem Elementarblattquerschnitt anfängt, dessen Position entlang der Spannweite zwischen 0,35 R und 0,65 R liegt, und sich bis zu einem Elementarblattquerschnitt erstreckt, dessen Position entlang der Spannweite zwischen 0,5 R und etwa 0,8 R liegt, und der Vorwärtspfeilungswinkel kleiner als oder gleich 20° ist und bevorzugt in der Größenordnung von 3,8° liegt.

7. Blatt nach einem der Ansprüche 1 bis 6, **dadurch gekennzeichnet, daß** das profilierte Strömungsteil (21) einen inneren Teil (33) umfaßt, der nicht gepfeilt ist und sich vom Wurzelteil (25) des Blattes zu seinem vorwärts gepfeilten Teil (32) erstreckt.

8. Blatt nach einem der Ansprüche 1 bis 7, **dadurch gekennzeichnet, daß** der Elementarblattquerschnitt maximaler Tiefe in einer Zone etwa zwischen 0,45 R und 0,75 R liegt und der Wert der maximalen Tiefe zwischen etwa 105 % und etwa 150 % der Tiefe bei der Wurzel des Blattes liegt.

9. Blatt nach Anspruch 8, **dadurch gekennzeichnet, daß** es in seinem profilierten Strömungsteil eine Tiefe aufweist, die fortschreitend entlang der Spannweite in Richtung zur Blattspitze (28) von etwa 0,2 R bis etwa 0,67 R zunimmt, wo die Tiefe einen Maximalwert von etwa 133 % der Tiefe bei der Wurzel (25) annimmt, wobei der Elementarblattquerschnitt, der die maximale Tiefe hat, näher bei der Wurzel (25) liegt als der Elementarquerschnitt maximalen Vorwärtsversatzes im vorwärts gepfeilten Teil (32), wobei die Tiefe danach entlang der Spannweite bis zur Blattspitze (28) reduziert wird, wo die Tiefe im wesentlichen gleich der Hälfte der Tiefe bei der Wurzel (25) ist.

10. Blatt nach einem der Ansprüche 1 bis 9, **dadurch gekennzeichnet, daß** es ein Dicke-Tiefenverhältnis aufweist, das entlang der Spannweite in Richtung zur Blattspitze (28) abnimmt, zumindest im rückwärts gepfeilten Endteil (31), und das sich vorzugsweise von etwa 12 % im Wurzelteil (25) bis etwa 7 % an der Blattspitze (28) ändert.

11. Blatt nach einem der Ansprüche 1 bis 10, **dadurch gekennzeichnet, daß** es ein Gesetz linearer Schränkung aufweist, wobei sich die Schränkung um etwa -10° vom Zentrum (Z-Z) des Rotors zur Blattspitze (28) ändert.

12. Blatt nach einem der Ansprüche 1 bis 11, **dadurch gekennzeichnet, daß** der rückwärts gepfeilte Endteil (31) eine im wesentlichen rechteckige oder trapezförmige Grundrißform aufweist.

13. Blatt nach einem der Ansprüche 1 bis 11, **dadurch gekennzeichnet, daß** der rückwärts gepfeilte Endteil (31) eine parabolische Entwicklung der Rückwärtspfeilung aufweist.

14. Blatt nach einem der Ansprüche 1 bis 13, **dadurch gekennzeichnet, daß** die Blattspitze (28), die vom rückwärts gepfeilten Endteil (31) aus nach außen hin vorsteht, ungepfeilt oder vorwärts gepfeilt oder von parabolischer Grundrißform ist.

15. Luftfahrzeug-Drehflügelanordnung, die einen Rotor mit wenigstens zwei Blättern umfaßt, die durch ihren Fuß (6, 26) mit einer Nabe (7,27) verbunden sind, die um eine Drehachse (Z-Z) des Rotors drehangetrieben werden soll, **dadurch gekennzeichnet, daß** jedes Blatt des Rotors ein Blatt nach einem der Ansprüche 1 bis 14 ist.

## Claims

1. A blade for an aircraft rotating aerofoil, comprising an aerodynamically profiled main part (21) extending, along the blade chord, between a leading edge (22) and a trailing edge (23), and, along the blade span, between a root part (25) provided with a blade root (26) for its connection to a rotor hub (27) rotating about a rotor axis of rotation (Z-Z), and a blade tip (28), at its free end, **characterised in that** the aerodynamically profiled main part (21) includes an external end part (31), relative to the rotor axis (Z-Z), and adjacent to the blade tip (28), said end part (31) extending along the span over a distance of at least 0.2 R, where R is the rotor radius measured between the rotor axis of rotation (Z-Z) and the blade tip (28), and said end part (31) being rear cambered over a distance along the span of at least 0.15 R, said aerodynamically profiled main part (21) comprising also a front cambered part (32), which is immediately adjacent to the inside of the rear cambered end part (31), the aerodynamically profiled main part (21) comprising in addition a progressively increasing chord portion (33-32a) which is extended by a progressively decreasing-chord portion (32b-31) along the span in the direction of the blade tip (28).

2. A blade according to claim 1, **characterised in that** said increasing chord portion (33-32a) includes at least a zone in which the leading edge (22) is orientated, along the span in the direction of the blade tip (28) towards the front of the blade in the rotor plane.

3. A blade according to one of the claims 1 and 2, **characterised in that** said increasing chord portion (33-32a) includes at least a zone (33) in which the trailing edge (23) is orientated, along the span in the direction of the blade tip (28), towards the rear of the blade in the rotor plane

4. A blade according to any one of the claims 1 to 3, **characterised in that** said front cambered part (32) includes an internal portion (32a) and an external portion (32b), adjacent to each other along to the span in the direction of the blade tip (28), said internal portion (32a) being a progressively increasing chord along the span in the direction of said external portion (32b), and said external portion (32b) being, on the one hand, adjacent to the rear cambered end part (31), and, on the other hand, of a progressively decreasing chord along the span in the direction of said rear cambered end part (31).

5. A blade according to any one of the claims 1 to 4, **characterised in that** the rear cambered end part (31) begins at a blade cross-section the position of which along the span is between 0.5 R and 0.8 R, the rear cambered part (31) extending preferably between 0.8 R and R, and the rear camber angle being between 10° and 40°, and preferably approximately 21°.

6. A blade according to any one of the claims 1 to 5, **characterised in that** the front cambered part (32) begins at a blade cross-section the position of which along the span is between 0.35 R and 0.65 R and extends up to a blade cross-section the position of which, along the span, is between 0.5 and about 0.8 R, and the front camber angle is less than or equal to 20°, and preferably is of the order of 3.8°.

7. A blade according to one of the claims 1 to 6, **characterised in that** it includes an internal portion (33) of aerodynamically profiled main part (21) with zero camber, extending from the blade root part (25) to its front cambered part (32).

8. A blade according to any one of the claims 1 to 7, **characterised in that** the blade maximum chord cross-section is situated in a zone between about 0.45 R and 0.75 R, and the value of the maximum chord is between about 105% and about 150% of the chord at the blade root part.

9. A blade according to claim 8, **characterised in that** it has, in its aerodynamically profiled main part, a chord increasing progressively along the span in the direction of the blade tip (28) from about 0.2 R up to about 0.67 R, where the chord has a maximum value of about 133% of the chord at the root part (25), the blade cross-section having the maximum chord being situated nearer the root part (25) than the maximum forward tilt cross-section in the front cambered part (32), the chord being then reduced along the span up to the blade tip (28), where the chord is equal to approximately half of the chord at the root part (25).

10. A blade according to any one of the claims 1 to 9, **characterised in that** it has a relative thickness which decreases along the span in the direction of the blade tip (28), at least in the rear cambered end part (31), and preferably which varies from about 12% in the root part (25) to about 7% at the blade tip (28).

11. A blade according to any one of the claims 1 to 10, **characterised in that** it has linear twist law, the twist varying by about -10° from the rotor centre (Z-Z) to the blade tip (28).

12. A blade according to any one of the claims 1 to 11, **characterised in that** the rear cambered end part (31) has an approximately rectangular or trapezoidal shape in plan.

13. A blade according to any one of the claims 1 to 11, **characterised in that** the rear cambered end part (31) has a rear camber parabolic evolution.

14. A blade according to any one of the claims 1 to 13, **characterised by** the fact that the blade tip (28), projecting outwards from the rear cambered end part (31), has a zero camber or a front camber or a parabolic shape in plan.

15. An aircraft rotating aerofoil, comprising a rotor with at least two blades connected by their root (6, 26) to a hub (7, 27) intended to be rotated around a rotor rotation axis (Z-Z), **characterised in that** each rotor blade is a blade according to one of the claims 1 to 14.
